# EUROPEAN PATENT APPLICATION

(11) **EP 2 023 433 A1**
(43) Date of publication of application: **11.02.2009**
(21) Application number: 06741908.5
(22) Date of filing: 18.05.2006
(51) Int. Cl.: H01M 10/40

(54) **A LITHIUM-ION BATTERY WITH MEDIUM AND SMALL CAPACITY AND HIGH OUTPUT**

(71) Applicant: Citic Guoan Mengguli New Energy Technology Co., Ltd., Changping District Beijing 102200 (CN)
(72) Inventor: QI, Lu, Beijing 102200 (CN); LI, Linxiang, Beijing 102200 (CN); WANG, Jian, Beijing 102200 (CN); ZHU, Xiufeng, Beijing 102200 (CN); LI, Jianhua, Beijing 102200 (CN); AN, Ping, Beijing 102200 (CN)
(74) Representative: Van kan, Johan Joseph Hubert
(86) International application number: PCT/CN2006/001020
(87) International publication number: WO 2007/134484

(57) **Abstract**

A lithium-ion battery with medium and small capacity and high output, comprising a shell, a cell core and electrolyte located in the shell; the said cell core obtained by winding anode sheets, cathode sheets and separators between the anode sheets and cathode sheets, the said anode sheets coated with anode active material, the said cathode sheets coated with cathode active material; the said anode active material including LiMn₂O₄; and the said electrolyte having the conductivity of 11-20ms/cm.

## Description

### Field of the invention

The invention relates to a lithium-ion battery, especially to a lithium-ion battery with medium and small capacity.

### Background of the invention

As to the lithium-ion battery with medium and small capacity (capacity of 1-3Ah), lithium-ion batteries developed before almost are volumetric type battery whose discharging current and output power are usually very low, and discharging magnification is usually lower than 5C.

However, in the field which needs high-current to charge and discharge, such as the application fields of electric tool, electric toy etc., nickel-hydrogen battery and nickel-cadmium battery occupied the market for long-term. Recently, the European Union has forbidden all products containing poison material of lead, mercury, cadmium and so on to enter the European market, so the nickel-cadmium battery with market share of above 90% will be limited outside the European market. Thus, needs a kind of lithium-ion battery with medium and small capacity which can have higher discharging current and output power, such as discharging magnification of high than 5C or much higher, to meet the requires.

### Summary of the invention

The object of the invention is to overcome the shortages of the prior art, and provide a lithium-ion battery with medium and small capacity and high output.

In order to realize the above said object, the invention provide a lithium-ion battery with medium and small capacity and high output, comprising a shell, a cell core and electrolyte located in the shell; the said cell core obtained by winding anode sheets, cathode sheets and separators between the anode sheets and cathode sheets, the said anode sheets coated with anode active material, the said cathode sheets coated with cathode active material; the said anode active material including LiMn₂O₄; especially still including LiCoO₂ and/or LiNiCoO₂; and the said electrolyte having the conductivity of 11-20ms/cm.

The advantages of the invention are below:
1) It can increase the energy density of the battery without decreasing the power density of the battery by choosing proper anode active material in the invention.
2) The anode and cathode sheets are long sheets with the length and thickness not only fit for lowering the current in unit area, but also fit for lithium-ion to embed in and off to increase input and output capability of the battery with high current.
3) The invention uses the electrolyte with high conductivity of 11-20ms/cm, thus the transmission of lithium-ion will be easy, and it will further improve the input and output capability of the battery with high current.

### Brief description of the drawing

FIG. 1 is a schematic view of the structure of the cell core in the lithium-ion battery;
FIG. 2(a) is a schematic plan view of the anode and cathode sheets in the lithium-ion battery;
FIG. 2(b) is a side view of the anode and cathode sheets in the lithium-ion battery;
FIG. 3 is a curve of the discharging magnification of the lithium-ion battery made by the invention.

### Detailed description

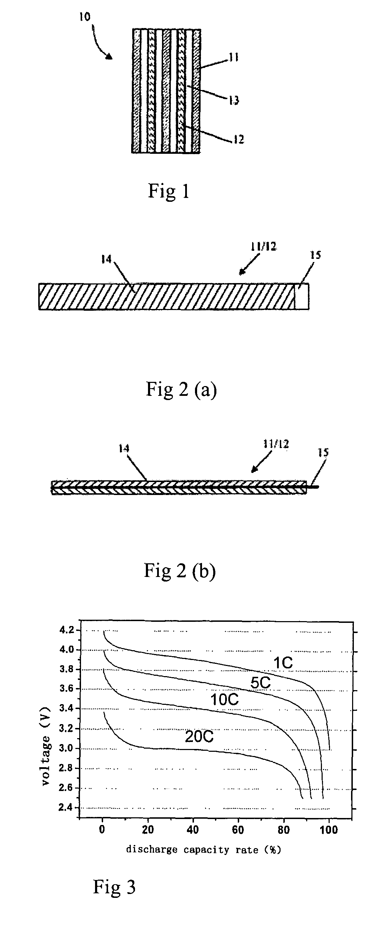

A lithium-ion battery usually comprises a shell, a cell core and electrolyte located in the shell. FIG. 1 schematicly shows the cell core 10 which is obtained by winding anode sheets 11, cathode sheets 12 and separators 13 between the anode sheets and cathode sheets. The cell core 10 is located in the shell (not shown), and fill up the electrolyte inside in the shell of the battery. The anode and cathode sheets 11 and 12 are as shown in FIG. 2(a) and FIG. 2(b), including coated areas 14 and uncoated areas 15. The coated areas 14 of anode sheets is coated with anode active material, while the coated areas 14 of cathode sheets is coated with cathode active material, and the coated areas 14 are usually coated with materials of conduction substance and adhesive substance and so on. The uncoated areas 15 of the anode and cathode sheets 11 and 12 use to connect the electrode ear( 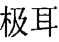 )(not shown). The above said contents are known by the skilled persons of this field.

In the lithium-ion battery with medium and small capacity and high output of the invention, the anode active material includes LiMn₂O₄; it is better to include LiCoO₂ and/or LiNiCoO₂. In an example, the anode active material only includes LiMn₂O₄. In another example, the anode active material is a mixture of LiMn₂O₄ and LiCoO₂. In another example, the anode active material is a mixture of LiMn₂O₄ and LiNiCoO₂. In another example, the anode active material is a mixture of LiMn₂O₄, LiCoO₂, and LiNiCoO₂.

When the anode active material includes include LiCoO₂ and/or LiNiCoO₂, LiCoO₂ or LiNiCoO₂ or their mixture would be 10%-50% of the gross weight of the anode active material, and correspondingly LiMn₂O₄ is 50%-90% of the gross weight of the anode active material. The proportion between LiCoO₂ and LiNiCoO₂ can be chose randomly. In some examples, LiCoO₂ or LiNiCoO₂ or their mixture is 10%, 30% or 50% of the gross weight of the anode active material, and correspondingly LiMn₂O₄ is 90%, 70% or 50% of the gross weight of the anode active material.

In the invention, the conductivity of the electrolyte is 11-20ms/cm, preferred 11-15ms/cm. In some examples, the conductivity of the electrolyte can choose 11ms/cm, 12ms/cm, 15ms/cm, or 20ms/cm.

In the invention, the length range of the anode sheets 11 and cathode sheets is 700-2400mm, such as 700mm, 1500mm or 2000mm; while the thickness (including coated material on the anode and cathode sheets) range is 65-135 µ m, such as 65 µ m, 85 µ m, 100 µ m, 120 µ m.

Two examples of the lithium-ion battery of the invention will be illustratively described below.

### Example 1:

Use anode active material of LiMn₂O₄ and anode sheets with length of 750-800mm and thickness of 125-135 µ m, cathode sheets with length of 800-850mm and thickness of 75-85 µ m, and the electrolyte with conductivity of 11-15ms/cm to make the lithium-ion battery with capacity of 1.1-1.2Ah.

### Example 2:

Use anode active material made by mixing certain proportion of LiMn₂O₄ and LiNiCoO₂, wherein LiMn₂O₄ is 90% by weight andLiNiCoO₂ is 10% by weight, and anode sheets with length of 1500-1600mm and thickness of 125-135 µ m, cathode sheets with length of 1550-1650mm and thickness of 75-85 µ m, and the electrolyte with conductivity of 11-15ms/cm to make the lithium-ion battery with capacity of 2.2-2.5Ah.

Tests show that the lithium-ion battery made by the invention can have excellent discharging property, and excellent quick charging property, thus fitting for usage mode of the electric tool to quickly charge and discharge. Discharging property and charging property are shown in the tables below.

| Magnification of discharging | Time of discharging | Capacity of discharging |
|---|---|---|
| 5C | 11.6min | 97% |
| 10C | 5.5min | 92% |
| 20C | 2.6min | 88% |

| Magnification of charging | Time of charging | Capacity of charging |
|---|---|---|
| 2C | 27min | 90% |
| 3C | 17min | 85% |
| 5C | 6min | 50% |

FIG. 3 is a curve of the discharging magnification of the lithium-ion battery made by the invention. It shows the lithium-ion battery with medium and small capacity and high output made by the invention has excellent discharging ability with high current, thus satisfying the operation of electric tool and so on.

## Claims

1. A lithium-ion battery with medium and small capacity and high output, comprises a shell, a cell core and electrolyte located in the shell; the said cell core obtained by winding anode sheets, cathode sheets and separators between the anode sheets and cathode sheets, the said anode sheets coated with anode active material, the said cathode sheets coated with cathode active material; **characterized in that**
the said anode active material includes LiMn₂O₄; and the conductivity of the said electrolyte is 11-20ms/cm.

2. The lithium-ion battery with medium and small capacity and high output according to claim 1, **characterized in that** the said anode active material still includes LiCoO₂ and/or LiNiCoO₂.

3. The lithium-ion battery with medium and small capacity and high output according to claim 2, **characterized in that** LiMn₂O₄ is 50%-90% by weight in the anode active material and LiCoO₂ and/or LiNiCoO₂ is 10%-50% by weight.

4. The lithium-ion battery with medium and small capacity and high output according to claim 1 or 2 or 3, **characterized in that** the conductivity of the said electrolyte is 11-15ms/cm.

5. The lithium-ion battery with medium and small capacity and high output according to claim 4, **characterized in that** the length of the said anode sheets and cathode sheets is 700-2400mm, and the thickness is 65-135 µ m.
